(19) Europäisches Patentamt
European Patent Office
Office européen des brevets

(11) **EP 1 969 314 B1**

(12) **FASCICULE DE BREVET EUROPEEN**

(45) Date de publication et mention de la délivrance du brevet:
**25.06.2014 Bulletin 2014/26**

(21) Numéro de dépôt: **06847107.7**

(22) Date de dépôt: **21.12.2006**

(51) Int Cl.:
**G01C 17/30** (2006.01)      **G01C 17/38** (2006.01)
**G01C 21/16** (2006.01)

(86) Numéro de dépôt international:
**PCT/FR2006/002831**

(87) Numéro de publication internationale:
**WO 2007/077346 (12.07.2007 Gazette 2007/28)**

(54) **PROCEDE D'ESTIMATION D'UN MOUVEMENT D'UN SOLIDE**

VERFAHREN ZUR SCHÄTZUNG EINER BEWEGUNG EINES FESTKÖRPERS

METHOD FOR ESTIMATING MOVEMENT OF A SOLID

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.12.2005 FR 0513269**

(43) Date de publication de la demande:
**17.09.2008 Bulletin 2008/38**

(73) Titulaires:
- **Commissariat à l'Énergie Atomique et aux Énergies Alternatives**
  **75015 Paris (FR)**
- **Institut National Polytechnique de Grenoble**
  **38031 Grenoble (FR)**
- **UNIVERSITE JOSEPH FOURIER**
  **38041 Grenoble Cedex 09 (FR)**

(72) Inventeurs:
- **CARITU, Yanis**
  **F-38134 Saint Joseph de Rivière (FR)**
- **GODIN, Christelle**
  **F-38190 Brignoud (FR)**
- **BARRAUD, Alain**
  **F-38190 Froges (FR)**

- **LESECQ, Suzanne**
  **F-38190 Froges (FR)**

(74) Mandataire: **Stankoff, Hélène Santarelli**
**14 avenue de la Grande Armée**
**BP237**
**75822 Paris Cedex 17 (FR)**

(56) Documents cités:
**US-A1- 2002 100 178**

- **MARINS J L ET AL: "An extended kalman filter for quaternion-based orientation estimation using MARG sensors" 29 octobre 2001 (2001-10-29), PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001, IEEE/RSJ INTERNATIONAL CONFERENCE ON INTELLIGENT ROBOTS AND SYSTEMS, NEW YORK, NY : IEEE, US, PAGE(S) 2003 , XP010573412 ISBN: 0-7803-6612-3 abrégé; figures 3,4 * section 2. 'Quaternions' * * section 4.2. 'Algorithms For Quaternion Convergence' ***

**Description**

La présente invention concerne un procédé d'estimation d'un mouvement d'un solide.

De manière générale, la présente invention concerne le domaine des centrales d'attitude permettant de connaître la position d'un solide dans l'espace.

Une centrale d'attitude est composée d'accéléromètre et de magnétomètres et est adaptée à mettre en oeuvre un traitement permettant de restituer l'orientation dans l'espace d'un solide porteur de la centrale d'attitude.

On connaît en particulier un tel dispositif dans le document français FR 02 04260.

Le dispositif décrit dans ce document permet d'obtenir une estimation des angles de rotation du solide à 360° et d'être complètement autonome vis-à-vis du milieu dans lequel se déplace le solide.

Par ailleurs, une telle centrale d'attitude ne nécessite pas l'utilisation de gyromètre, ce qui permet de diminuer le coût du dispositif et son encombrement.

On connaît par ailleurs par le document intitulé « An extended Kalman filter for quaternion-based orientation estimation using MARG sensors » de Marins J L et al, publié sous la référence ISBN 0-7803-6612-3, un procédé comprenant l'estimation de mouvement et d'orientation d'un véhicule à partir de trois composantes d'accélération et trois composantes de champ magnétique mesurées, ainsi que des variables de calibration pouvant définir des perturbations. Le document US2002100178 divulgue un procédé similaire.

La centrale d'attitude décrite dans le document FR 02 04260 permet de prendre en compte l'orientation du solide comme inconnue dans le modèle de mesure et le traitement des signaux provenant de la centrale d'attitude.

Or, lorsque l'accélération du mouvement du solide devient importante devant l'accélération de la pesanteur, les angles estimés sont entachés d'erreur puisque l'accélération due au mouvement du solide est associée à l'accélération due à la pesanteur.

Par ailleurs, le milieu même dans lequel le solide évolue peut générer des perturbations magnétiques qui ne sont pas prises en compte par la centrale d'attitude de l'état de la technique.

La présente invention a pour but de résoudre les inconvénients précités et de proposer un procédé d'estimation du mouvement d'un solide, mis en oeuvre dans une telle centrale d'attitude, permettant par rapport au procédé décrit dans le document FR 02 04 260, d'améliorer les performances en terme d'estimation de données utiles, de coût calculatoire et de précision et robustesse des résultats.

A cet effet, la présente invention vise un procédé d'estimation du mouvement d'un solide mobile dans un milieu susceptible de générer des perturbations définies par un vecteur à trois variables, le mouvement étant défini par un vecteur à six variables et ledit solide étant équipé d'au moins un capteur sensible à l'accélération ayant au moins trois axes de sensibilité et d'au moins un capteur sensible au champ magnétique ayant au moins trois axes de sensibilité.

Selon l'invention, le procédé d'estimation comprend une étape d'élaboration d'un vecteur à neuf variables constitué dudit vecteur de mouvement à six variables et dudit vecteur de perturbations à trois variables, et une étape de pondération dudit vecteur à neuf variables adapté à transformer ledit vecteur à neuf variables en un vecteur à au plus cinq variables inconnues à estimer.

Le procédé d'estimation comprend une étape de choix d'une configuration de mouvements parmi une table de configuration des mouvements, et l'étape de pondération est adaptée à remplacer une variable inconnue par une valeur connue dans le vecteur à neuf variables en fonction de la configuration choisie.

Le procédé d'estimation conforme à l'invention permet ainsi de prendre en compte non seulement l'orientation du solide dans le champ terrestre magnétique et gravitationnel, mais aussi l'accélération due au mouvement, ainsi que les perturbations, telles que des perturbations magnétiques intervenant dans le milieu dans lequel se déplace le solide, grâce à l'introduction de nouveaux paramètres représentés par le vecteur à neuf variables.

La Demanderesse a constaté que selon les conditions de mouvement du solide et du milieu dans lequel il évolue, il est possible de pondérer le vecteur à neuf variables en supposant connues au moins quatre variables de ce vecteur.

Grâce aux capteurs d'accélération et aux capteurs sensibles au champ magnétique ayant chacun trois axes de sensibilité, il est possible de déterminer cinq variables inconnues du vecteur ainsi pondéré.

Grâce à cette estimation du mouvement d'un solide qui permet non seulement de connaître l'orientation d'un solide mais également l'accélération ou les perturbations du milieu, il est possible d'utiliser le solide ainsi équipé de la centrale d'attitude et mettant en oeuvre le procédé d'estimation conforme à l'invention de manière élargie.

En particulier, il est possible de capturer des mouvements plus rapides et d'utiliser le solide dans des applications pour lesquelles sont requises de la précision et une stabilité des mesures.

Il est également possible d'estimer la position en translation du solide par rapport à une position de départ.

Dans une application donnée, le mouvement du solide est rarement libre dans l'espace. En particulier, lorsque le solide est mobile dans un milieu susceptible de générer des perturbations magnétiques, la configuration du mouvement peut être choisie parmi un ensemble de configuration de mouvement comprenant notamment un mouvement dans un milieu sans perturbations magnétiques, un mouvement dans un espace à une seule dimension, un mouvement dans un plan et un mouvement ayant au moins deux degrés de liberté connus.

En pratique, l'étape de pondération comprend une étape de choix d'un vecteur de poids adapté à modifier le poids respectif des capteurs équipant le solide et le procédé comprend une étape d'estimation d'au moins une variable du vecteur à neuf variables, à au plus cinq variables inconnues à estimer à partir de la mesure d'au moins un capteur associé.

Ainsi, un vecteur de poids permet d'ignorer certains capteurs selon certains ou tous ses axes de sensibilité de telle sorte qu'il est possible de déterminer uniquement certaines variables à estimer.

Avantageusement, le procédé d'estimation comprend au moins une étape de réitération des 'étapes de choix d'un vecteur de pondération et d'estimation d'au moins une variable du vecteur à au plus cinq variables inconnues à estimer, le vecteur de poids choisi à ladite étape de choix étant différent à chaque étape de réitération.

En réalisant ainsi plusieurs passes et en modifiant la configuration du vecteur de poids, il est possible d'estimer alternativement les différentes variables du vecteur à au plus cinq variables inconnues à estimer.

Selon un mode de réalisation pratique de l'invention, le procédé d'estimation comprend une étape de choix d'un vecteur de poids adapté à ignorer la mesure du ou des capteurs sensibles à l'accélération, une étape d'estimation d'au moins deux variables du vecteur à au plus cinq variables inconnues à estimer à partir de la mesure du ou des capteurs sensibles au champ magnétique, une étape de choix d'un vecteur de poids adapté à ignorer la mesure du ou des capteurs sensibles au champ magnétique et une étape d'estimation d'au plus les trois autres variables dudit vecteur à au plus cinq variables inconnues à estimer à partir de la mesure du ou des capteurs sensibles à l'accélération.

Ainsi, en ignorant dans un premier temps la mesure des capteurs sensibles à l'accélération, il est possible de déterminer des angles dans l'espace correspondant à l'orientation du solide grâce au capteur sensible au champ magnétique qui n'est pas sensible à l'accélération du solide.

Une fois ces angles estimés, il est alors possible d'estimer les autres variables, et par exemple un troisième angle et deux accélérations du solide, à partir du ou des capteurs sensibles à l'accélération.

Alternativement, le procédé d'estimation comprend une étape de choix d'un vecteur de poids adapté à ignorer la mesure du ou des capteurs sensibles au champ magnétique, une étape d'estimation d'au moins deux variables dudit vecteur à au plus cinq variables inconnues à estimer à partir de la mesure du ou des capteurs sensibles à l'accélération, une étape de choix d'un vecteur de poids adapté à ignorer les capteurs sensibles à l'accélération et une étape d'estimation d'au plus les trois autres variables dudit vecteur à au plus cinq variables inconnues à estimer à partir de la mesure du ou des capteurs sensibles au champ magnétique.

En pratique, afin de diminuer les difficultés en terme de temps des calculs, lorsque le vecteur à neuf variables comprend un vecteur de rotation à trois degrés de liberté, le vecteur de rotation est représenté par quatre composantes d'un quaternion associé à une contrainte sur les quatre composantes du quaternion.

L'utilisation du symbolisme du quaternion permet d'aboutir à des fonctions quadratiques plus simples à résoudre que les fonctions trigonométriques qui donnent un caractère non linéaire particulier aux équations à résoudre pour déterminer les cinq variables du vecteur permettant d'estimer le mouvement du solide.

En pratique, à l'étape d'estimation d'au moins une variable dudit vecteur à au plus cinq variables à estimer, la contrainte des composantes du quaternion est intégré dans la représentation du vecteur de rotation.

Selon un mode pratique de l'invention, à l'étape d'estimation d'au moins une variable du vecteur à au plus cinq variables inconnues à estimer, une fonction de minimisation d'erreurs de type quasi Newton est utilisée.

Selon un second aspect de l'invention, elle concerne un dispositif d'estimation du mouvement d'un solide d'un mobile dans un milieu susceptible de générer des perturbations définies par un vecteur à trois variables, ledit mouvement étant défini par un vecteur à six variables.

Le dispositif d'estimation est monté sur ledit solide et comprend au moins un capteur sensible à l'accélération ayant au moins trois axes de sensibilité et au moins un capteur sensible au champ magnétique ayant au moins trois axes de sensibilité.

Ce dispositif d'estimation est adapté à mettre en oeuvre le procédé d'estimation du mouvement d'un solide conforme à l'invention.

Le dispositif d'estimation du mouvement d'un solide présente des caractéristiques et avantages analogues à ceux décrits précédemment en relation avec le procédé conforme à l'invention.

D'autres particularités et avantages de l'invention apparaîtront encore dans la description ci-après.

Aux dessins annexés, donnés à titre d'exemples non limitatifs :

- la figure 1 est un schéma illustrant le mouvement d'un solide qui peut être estimé par le procédé d'estimation du mouvement conforme à l'invention ;
- les figures 2A, 2B, 2C sont des représentations schématiques de dispositifs d'estimation du mouvement d'un solide conformes à trois modes de réalisation de l'invention ; et
- la figure 3 est un schéma synoptique illustrant le procédé d'estimation du mouvement d'un solide conforme à l'invention.

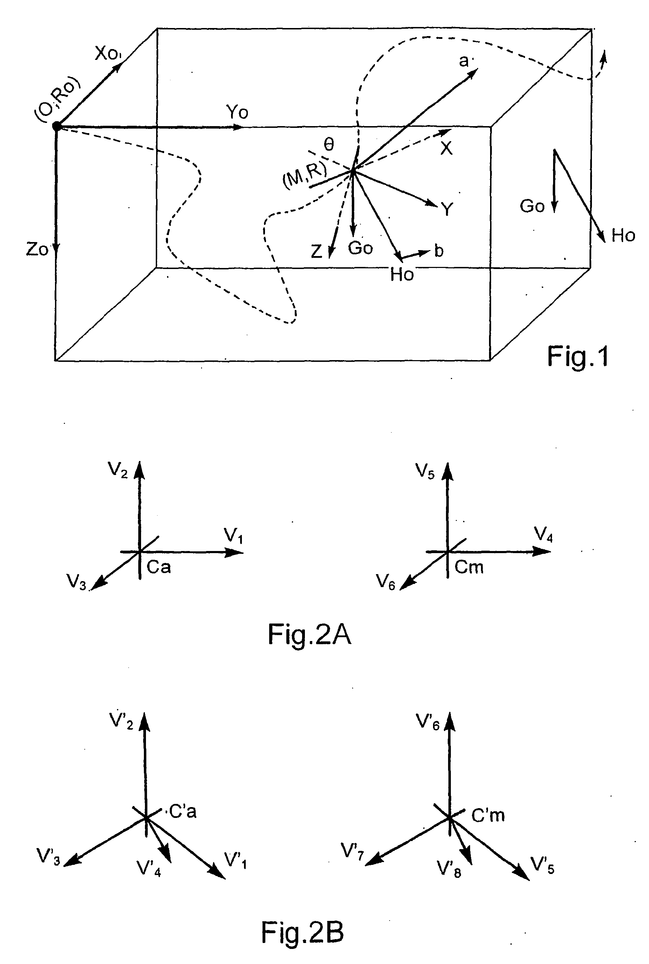

On va d'abord décrire en référence à la figure 1 le type de mouvement d'un solide estimé par le procédé conforme à l'invention.

L'objectif est de reconstruire au cours du temps l'orientation et la dynamique, c'est-à-dire l'accélération d'un solide mobile qui embarque un dispositif de mesure. Par voie de conséquence, on pourra estimer également la trajectoire (intégrale double de l'accélération).

Le solide mobile est ici considéré comme ponctuel et est repéré par une position M comme indiquée sur la figure 1. Son orientation est repérée par le vecteur θ, qui correspond à l'orientation d'un repère R dans un repère fixe Ro (qui peut être un repère initial dans une phase de repos au point 0).

En outre, à tout instant, l'accélération propre au mouvement est notée a. Le dispositif de mesure est sensible également à l'accélération de la pesanteur notée Go et au champ magnétique terrestre ambiant noté Ho (champ magnétique mesuré au repos). D'éventuelles perturbations magnétiques au point de site du mobile ajoutent une contribution magnétique notée *b*.

Ici, à titre d'exemples non limitatifs, l'axe Z du repère fixe Ro est aligné avec la verticale et donc avec Go.

Selon le principe de Galilée-Einstein, l'accélération mesurable résultante en M est l'accélération non gravitationnelle, c'est-à-dire, proportionnelle à : *a*-Go.

Le champ magnétique mesurable résultant en M est : Ho+*b*.

Le mouvement du solide est défini par un vecteur à six variables correspondant au mouvement propre du solide. Trois premières variables correspondent à trois dimensions en rotation, c'est-à-dire à l'orientation repérée par le vecteur θ.

Trois autres variables correspondent à la position du solide dans le repère R, correspondant ainsi aux coordonnées X, Y, Z dans le repère R. Ces coordonnées peuvent être déduites par intégrale double du vecteur d'accélération a du mobile qui sera ainsi choisi comme variable du mouvement.

En outre, compte tenu du milieu dans lequel évolue le solide, celui-ci peut être défini par un vecteur à trois variables représentant d'éventuelles perturbations magnétiques *b*.

De manière générale, neuf variables permettent de décrire le système observé en mouvement dans son environnement.

Ainsi, lorsque le solide est dans une position initiale au repos, on peut définir un vecteur Po tel que :

$$Po = (Go, Ho),$$

avec :

- Go de dimension 3 correspondant à l'accélération de la pesanteur,
- Ho de dimension 3 correspondant au magnétisme terrestre,
- (M, R) ≡ (O, Ro) et
- vecteur θ = 0

Lorsque le solide entre en mouvement, un vecteur *p* est ajouté au vecteur initial Po.

Le vecteur *p* est défini comme suit *p* = (*a*, *b*), où *a* et *b* sont des vecteurs de dimension 3.

Le champ total mesuré par le dispositif de mesure correspond ainsi à la somme des vecteurs Po + *p*.

On obtient ainsi un vecteur à neuf variables définissant le mouvement du solide dans lequel les inconnues sont les angles du vecteur θ, l'accélération a du solide et la perturbation magnétique *b*.

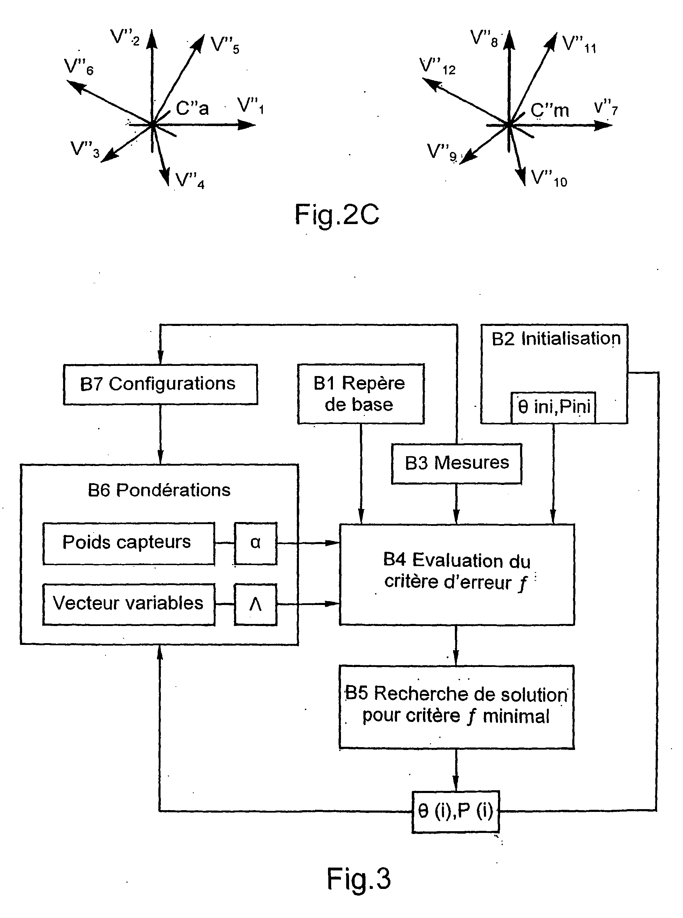

On va décrire à présent en référence aux figures 2A, 2B et 2C différents modes de réalisation d'un dispositif d'estimation du mouvement conforme à l'invention.

Le dispositif d'estimation est constitué uniquement de magnétomètres et d'accéléromètres. Il est monté sur le solide dont on souhaite estimer le mouvement.

Comme illustré sur la figure 2A, le dispositif d'estimation du mouvement doit comporter au moins un capteur d'accélération Ca ayant au moins trois axes de sensibilité V1, V2, V3 et au moins un capteur sensible au champ magnétique Cm ayant également trois axes de sensibilité V4, V5, V6.

Selon un autre mode de réalisation, comme illustré sur la figure 2B, chaque capteur C'a et C'm peut comporter respectivement quatre axes de sensibilité de telle sorte que le capteur d'accélération C'a comporte les axes de sensibilité V'1, V'2, V'3, V'4 et le capteur sensible au champ magnétique C'm comporte les axes de sensibilité V'5, V'6, V'7, V'8.

De même, afin de fiabiliser les mesures comme illustré à la figure 2C, le dispositif d'estimation peut comporter deux capteurs d'accélération C"a ayant chacun trois axes de sensibilité V"1, V"2, V"3, V"4, V"5, V"6 et deux capteurs sensibles au champ magnétique C"m ayant chacun trois axes de sensibilité V"7, V"8, V"9, V"10, V"11 et V"12.

En pratique, le dispositif d'estimation conforme à l'invention doit comporter au moins autant d'axes sensibles que de paramètres inconnus à estimer dans le mouvement du solide équipé du dispositif.

Par ailleurs, selon le type de variables à estimer, certains capteurs ne doivent pas être manquants. En particulier, il n'est pas possible d'estimer correctement un angle d'azimut horizontal sans magnétomètre dont la projection dans le plan horizontal n'est pas nulle.

Par ailleurs, plus il existe d'axes sensibles selon différentes directions, meilleure sera l'estimation des paramètres puisque le rapport signal à bruit est augmenté. Toutefois, le dispositif d'estimation présente un coût directement dépendant du nombre de capteurs d'accélération ou sensibles au champ magnétique utilisé.

En pratique, les deux systèmes d'axes de mesure V1, V2, V3 et V4, V5, V6 sont confondus en un même point. Pour des raisons de clarté, ils sont séparés spatialement sur les figures 2A, 2B, 2C.

En pratique, il n'est pas possible de superposer les capteurs Ca et Cm en un même point mais l'erreur introduite est faible si on utilise des microcapteurs.

Chaque type de capteur accéléromètre ou magnétomètre se suffit de trois axes sensibles non alignés. Au-delà, selon un résultat bien connu en traitement du signal, c'est le rapport signal à bruit qui se trouve augmenté et mieux réparti sur la plage de fonctionnement.

On va décrire à présent en référence à la figure 3 le procédé d'estimation du mouvement d'un solide conforme à l'invention.

Le procédé comporte tout d'abord une étape de définition B1 du repère de base Ro qui peut être un repère fixe défini par ses coordonnées géophysiques telles que la latitude ou la longitude ou encore de manière relative en considérant qu'il s'agit de la position du solide à un moment initial t=0.

La position du repère mobile Ro correspond ainsi aux mesures initiales données par les capteurs V(t) avec t=0.

Comme décrit précédemment, à cette position initiale est affectée un champ magnétique terrestre Ho et une accélération due à la pesanteur Go.

Une étape d'initialisation B2 est également mise en oeuvre afin de définir les valeurs initiales à un instant T=0 du vecteur de rotation θ et du vecteur de perturbation p.

Une étape de mesure B3 est ensuite mise en oeuvre à chaque instant afin de réaliser une mesure V(t).

On va décrire à présent le principe général du traitement de cette mesure.

La mesure V(t) est une représentation du champ physique complet Po+p dans le repère des capteurs. Afin d'exprimer les neuf variables inconnues dues au mouvement et aux perturbations magnétiques dans le repère fixe Ro, les opérations nécessaires successives pour obtenir la mesure à partir du champ physique Po+p (exprimé dans le repère Ro) sont les suivantes :

- expression de la rotation θ du repère fixe dans le repère mobile,
- projection du champ Po+p sur le repère mobile,
- projection du résultat dans le repère sensible orienté θj connu et attaché au repère mobile (cette opération disparaît pour les capteurs dont les axes coïncident avec ceux du repère mobile choisi).

L'expression de la mesure théorique (ou modèle de mesure) en fonction du champ est donc de la forme :

$$V_{\mathrm{mod}}(j) = proj_{\theta j}\big[R_\theta(Po + p)\big]$$

La fonction inverse directe n'est pas explicite dans le cas général et on a recours, à une étape d'évaluation B4, à des méthodes de minimisation d'erreur, le critère à minimiser étant le suivant :

$$f(\theta, p) = \sum_{j=1}^{Na+Nb} \alpha_j (V_{\mathrm{mod}}(j) - V(j))^2$$

où le nouveau paramètre $\alpha_j$ représente une pondération de la contribution du capteur selon un axe de sensibilité *j* et Na+Nb correspond au nombre total d'axes de sensibilité des capteurs sensibles au champ magnétique et à l'accélération.

Le vecteur $\alpha = (\alpha_1, \alpha_2, ... \alpha_j ... \alpha_{Na+Nb})$ est de dimension Na+Nb et permet de pondérer la mesure des capteurs selon leurs différents axes de sensibilité. À titre d'exemple, pour une boussole compensée en inclinaison, l'utilisation de la mesure selon deux axes de l'accéléromètre donne une inclinaison par rapport à la verticale et l'utilisation de la mesure selon quatre axes du magnétomètre donne l'angle dans le plan incliné.

Ce vecteur de pondération $\alpha$ peut être imposé par l'utilisateur ou mis à jour de façon adaptative selon des critères de confiance qu'on accorde à la mesure selon les axes de sensibilité des différents capteurs :

$\alpha_j = 1$ : confiance,

$\alpha_j = 0$ : mise hors jeu de la mesure donnée par un capteur selon l'axe de sensibilité $j$.

Entre ces deux valeurs extrêmes, on peut exprimer plus ou moins de contribution de l'information de mesure.

Par exemple, si le capteur est plus bruité que les autres, on choisira un coefficient de pondération inversement proportionnel à la variance.

La formulation de la fonction de rotation θ peut être exprimée par une composition de matrice (fonction trigonométrique) dans un système particulier (Euler, Cardan, ...) ou encore par les quaternions (fonction quadratique) dont l'utilisation sera décrite ci-après.

Dans tous les cas, le modèle de mesure s'exprime de manière affine en fonction de l'inconnue $p$ :

$$V_{\mathrm{mod}}(j) = A(\theta) \times p + B(\theta)$$

où $A(\theta)$ et $B(\theta)$ sont des fonctions du vecteur $\theta$.

Le procédé de traitement doit aboutir à fournir une optimisation de (θ, p) tel que le critère $f$ soit minimal. On cherche ainsi à l'étape de calcul B5 à résoudre la fonction :

$$\min_{(\theta, p)} f(\theta, p) = \min_{\theta} \left\{ \min_{p} (f(\theta, p)) \right\}$$

La résolution en $p$ étant linéaire, la solution des moindres carrés en $p$ est une solution explicite.

De préférence, une fonction de minimisation d'erreurs de type quasi Newton est utilisée.

Le vecteur de rotation à trois degrés de liberté peut être représenté par quatre composantes d'un quaternion associé à une contrainte sur ces quatre composantes, de manière à simplifier les calculs.

En effet, l'expression mathématique classique pour le vecteur de rotation est celle des matrices d'angles. L'expression finale comporte un grand nombre de fonctions trigonométriques qui donne un caractère non linéaire particulier au critère et qui pose des difficultés en terme de temps de calcul.

On préférera utiliser le symbolisme des quaternions qui permet d'aboutir à des fonctions quadratiques. Les trois degrés d'orientation sont alors représentés par quatre composantes :

$$q = (q_0 \, q_1 \, q_2 \, q_3)$$

avec :

$q_0 = \cos(x_1)$
$q_1 = \sin(x_1) \, u_x$
$q_2 = \sin(x_1) \, u_y$
$q_3 = \sin(x_1) \, u_z$

avec $u$ les coordonnées de l'axe de rotation. Ces quatre composantes répondent, dans le cas où ils représentent une rotation, à la contrainte :

$$\sum q_i^{\,2} = 1$$

En outre, à l'étape de calcul B5, afin d'éviter d'utiliser des méthodes d'optimisation avec contrainte, on pourra utiliser une "contrainte intégrée" dans le vecteur de rotation :

- soit en considérant tous les cas possibles suivants :

$$u = \frac{1}{\sqrt{1+x_2^2+x_3^2}}\begin{pmatrix}1\\x_2\\x_3\end{pmatrix} ou\, u = \frac{1}{\sqrt{1+x_2^2+x_3^2}}\begin{pmatrix}x_1\\1\\x_3\end{pmatrix} ou...$$

- soit en exprimant l'axe de rotation en coordonnées sphériques :

$$q = \begin{pmatrix}\cos(x_1)\\\sin(x_1)u\end{pmatrix} et\, u = \begin{pmatrix}\cos(x_2)\cos(x_3)\\\sin(x_2)\cos(x_3)\\\sin(x_3)\end{pmatrix}$$

Conformément à l'invention, afin de faciliter la résolution des critères à minimiser *f* tels que décrits précédemment, on met en oeuvre une étape de pondération B6 permettant de pondérer le vecteur à neuf variables pour transformer celui-ci en un vecteur à au plus cinq variables inconnues à estimer.

Ce vecteur de pondération dépend en particulier du choix d'une configuration de mouvement réalisée à une étape de choix d'une configuration B7 parmi une table de configuration de mouvement.

De préférence, cette étape de choix d'une configuration B7 est réalisée automatiquement au moins dans des cas classiques d'utilisation du dispositif.

On notera par la suite les neuf variables de la manière suivante :

$$(\theta = \theta_0\,\theta_1\,\theta_2,\, p = a_0\,a_1\,a_2\;\;b_0\,b_1\,b_2)$$

et le vecteur des variables d'un système :

$$\Lambda = (...\theta_{i1}...\widetilde{\theta}_{i2}..-..i_1,i_2 \in \{0,1,2\}, \widetilde{a}_{j1}...a_{j2}.-...j_1,j_2 \in \{0,1,2\}, \widetilde{b}_{k1}...b_{k2}.-..k_1,k_2 \in \{0,1,2\})$$

Avec :

- la notation Xi indique une variable inconnue à trouver
- la notation "-" indique que le problème ne dépend pas de cette variable (cas où certains capteurs ne sont pas pris en compte)
- la notation $\widetilde{X}i$ indique une valeur connue mise en lieu et place de la variable.

On va décrire à présent le cas particulier de pondération de ce vecteur $\Lambda$ lorsque des perturbations magnétiques sont nulles ou connues.

Ce cas de figure regroupe toutes les applications dans lequel le mobile n'évolue pas dans un environnement magnétique terrestre perturbé par des masses ferromagnétiques intruses et inconnues.

Tel est le cas notamment d'une personne réalisant des gestes sportifs sur un stade ou dans une salle, éloignée d'au moins un mètre d'appareils en acier.

Ce cas d'application se retrouve également lorsqu'un mobile est dans une situation dans laquelle on sait prédire les perturbations magnétiques, par exemple lorsque le capteur est solidaire d'un objet ferromagnétique dont on connaît les caractéristiques physiques (capteur dans un téléphone portable, batterie, carrosserie de voiture, véhicules en tout genre, ...).

A l'étape de choix d'une configuration B7, il est possible de connaître à l'avance ou de prédire la configuration du mouvement.

Les variables liées à la perturbation magnétique étant nulles ou connues, les six variables inconnues correspondent au vecteur de mouvement du solide.

Il est nécessaire de connaître une de ces variables parmi l'orientation et/ou l'accélération du solide.

L'étape de choix d'une configuration B7 permet également en fonction du type de mouvement, de déterminer à l'avance une de ces variables.

A titre d'exemple, si le capteur est mis sur une structure comme un membre d'une personne ou un bras de robot, les degrés de liberté angulaires sont souvent strictement inférieurs à trois, comme dans le cas des articulations pour l'homme (coude, genou, cheville, poignet) ou un moteur de rotation pour les bras de robot (1 ou 2 moteurs à l'articulation).

De même, pour un système sur suspension comme un véhicule sur roue, les ressorts permettent dans de bonnes conditions d'adhérence un mouvement de tangage et de roulis, c'est-à-dire, avec deux angles de rotation, le troisième correspondant au cap pouvant être donné par un autre système, par exemple un GPS.

De même au niveau de l'accélération, il est possible de connaître à l'avance l'une des variables, notamment lorsque le mouvement de translation est accéléré dans un plan, tel que cela est le cas pour un véhicule sur la route, ou un train, auquel cas l'accélération selon une direction perpendiculaire au plan est nulle.

L'étape de pondération B6 permet ainsi d'une part de pondérer le vecteur à neuf variables afin de considérer comme nulles ou connues certaines des variables et de pondérer le vecteur de poids $\alpha$ décrit précédemment afin de faciliter le calcul du critère à minimiser $f$ en ignorant un ou plusieurs capteurs.

Par exemple, on choisit un vecteur de poids $\alpha$ adapté à ignorer la mesure des capteurs sensibles à l'accélération :

$$\alpha = \left( \underbrace{0\ 0\ 0}_{accéléro}\ \underbrace{1\ 1\ 1}_{magnéto} \right)$$

Dans le cas où il n'y a pas de perturbations magnétique $b$ ou si celle-ci est connue, un capteur sensible au champ magnétique ayant trois axes de sensibilité permet de connaître l'orientation du solide selon deux dimensions. En outre, ces capteurs magnétométriques ne sont pas sensibles aux accélérations de telle sorte qu'il est possible de déterminer les orientations du solide indépendamment de son accélération.

De préférence, pour augmenter la sensibilité, on choisira le repère de référence avec un axe Z colinéaire au champ magnétique.

Le vecteur à neuf variables ainsi pondéré s'écrit :

$$\left( \underbrace{-\ \theta_2\ \theta_3}_{orientation}\ \underbrace{-\ -\ -}_{accélérations}\ \underbrace{\tilde{b}_1\ \tilde{b}_2\ \tilde{b}_3}_{perturbations} \right)$$

Comme indiqué précédemment, les étapes d'évaluation du critère B4 et de calcul B5 sont mises en oeuvre en utilisant le vecteur de pondération $\alpha$ et le vecteur pondéré $\Lambda$ de manière à estimer la valeur des angles $\theta_2$ et $\theta_3$ correspondant à l'orientation selon deux directions du solide.

Ensuite, une étape de réitération permet de réitérer les étapes de pondération B6 en modifiant le vecteur de poids $\alpha$.

Ainsi, à l'étape de pondération B6, on choisit un vecteur de poids $\alpha$ adapté à ignorer la mesure des capteurs sensibles au champ magnétique :

$$\alpha = \left( \underbrace{1\ 1\ 1}_{accéléro}\ \underbrace{0\ 0\ 0}_{magnéto} \right)$$

Parallèlement, le vecteur à neuf variables pondéré s'écrit de la manière suivante :

$$\left( \underbrace{\theta_1\ \tilde{\theta}_2 = \hat{\theta}_2\ \tilde{\theta}_3 = \hat{\theta}_3}_{orientation}\ \underbrace{a_1\ a_2\ \tilde{a}_3}_{accélérations}\ \underbrace{-\ -\ -}_{perturbations} \right)$$

dans lequel les angles d'orientation $\theta_2$ et $\theta_3$ sont estimés par les valeurs calculées précédemment, et la variable inconnue correspondant à l'accélération $a_3$ remplacé par une valeur connue déterminée en fonction de la configuration choisie.

Il est ainsi possible en réitérant les étapes d'évaluation du critère d'erreurs B4 et de calcul B5 de déterminer les valeurs des accélérations $a_1$ et $a_2$.

Ainsi, dans l'exemple précédent, les mesures données par les capteurs sensibles au champ magnétique permettent de déterminer deux états liés à l'orientation $\theta_1$ et $\theta_2$ du solide. Dans une seconde phase, les mesures données par les capteurs sensibles à l'accélération permettent d'estimer trois autres variables, et par exemple une variable liée à l'orientation $\theta_3$ et deux variables liées à l'accélération du solide $a_1$ et $a_2$.

Bien entendu, en fonction de la configuration du mouvement du solide, si la valeur du troisième paramètre d'orientation $\theta_3$ peut être estimée facilement ou donné par un autre système de mesure tel qu'un GPS, il est possible d'estimer les trois paramètres d'accélération $a_1$, $a_2$, $a_3$ à partir de la mesure donnée par les capteurs sensibles à l'accélération.

Bien entendu, le procédé d'estimation du mouvement peut être mis en oeuvre dans d'autres cas de configuration de mouvement, en particulier lorsque les perturbations magnétiques générées par le milieu sont inconnues.

Afin de résoudre le problème d'estimation, le vecteur à neuf variables doit être pondéré pour ne comporter qu'au plus cinq variables inconnues.

Dès lors que les trois variables liées aux perturbations magnétiques sont inconnues, il est nécessaire que le mouvement du solide comporte au moins quatre degrés de liberté connus.

Tel est le cas notamment lors d'un mouvement de la tête d'un promeneur selon les deux axes de rotation. Pour ce type de mouvement, la configuration des mouvements considère que les accélérations sont quasi nulles.

De même, lorsque le solide est mobile à plat dans un plan, il existe uniquement un angle de rotation, correspondant au cap du mouvement dans le plan, et deux accélérations inconnues de déplacement du mobile dans ce plan selon deux axes du plan.

Toute perturbation magnétique dans le plan peut également être déterminée par le procédé d'estimation du mouvement.

En pratique, le mode de résolution est le même que celui décrit précédemment, seul le formalisme entre les mesures réalisées par les capteurs sensibles au champ magnétique et le capteur sensible à l'accélération étant échangées.

Dans les exemples précédents, on a considéré qu'à l'étape de choix d'une configuration B7, il est possible de déterminer certains paramètres de perturbations magnétiques ou l'orientation du solide ou encore d'accélération de manière connue en fonction de la configuration du mouvement.

On peut également prévoir que le dispositif souhaite associer un certain mode de fonctionnement qui permette automatiquement d'établir une configuration de mouvements connue.

Ainsi, il est possible de paramétrer un mode de fonctionnement dit *"voiture"* qui correspond au déplacement dans un plan d'un solide, un mode dit *"vélo",* correspondant au déplacement dans un plan d'un solide ne provoquant pas de perturbations magnétiques ou encore un mode *"mouvement de tête"* dont les accélérations sont quasi nulles.

En pratique, le choix de la configuration permettant de déterminer au moins quatre variables du vecteur à neuf variables inconnues à estimer peut être dynamique, et dépendre notamment de la surveillance du module du champ magnétique.

Ainsi, à l'étape de choix d'une configuration B7, une surveillance automatique du module du champ magnétique peut être mise en oeuvre afin de tenir compte de manière progressive de la présence d'un perturbateur magnétique, telle que la présence d'un objet ferromagnétique générant des perturbations magnétiques sur les capteurs équipant le solide en mouvement.

Ainsi, la différence entre la norme du champ magnétique calculée à partir des mesures réelles et celle prédite est surveillée.

Dès que cette différence est trop importante, de l'ordre de 10%, le critère de confiance dans l'estimation est diminué proportionnellement.

De même, l'étape de choix d'une configuration B7 peut comporter une surveillance automatique du module du champ d'accélération mesuré.

Ainsi, quand la différence a - Go devient supérieure à 10% Go, alors l'accélération ne peut plus être négligée ou considérée comme constante.

Bien entendu, la présente invention n'est pas limitée aux exemples de réalisation décrits précédemment.

En particulier, le dispositif de mesure peut comporter indifféremment des capteurs ayant trois axes de sensibilité ou trois capteurs ayant chacun un axe unique de sensibilité disposés en triaxe.

Par ailleurs, le vecteur de pondération $\alpha$ peut comporter des coefficients de pondération compris entre les valeurs 0 et 1.

**Revendications**

1. Procédé d'estimation du mouvement d'un solide mobile dans un milieu susceptible de générer des perturbations définies par un vecteur à trois variables (b), ledit mouvement étant défini par un vecteur à six variables ($\theta$, a) et ledit solide étant équipé d'au moins un capteur (Ca) sensible à l'accélération ayant au moins trois axes de sensibilité et d'au moins un capteur (Cm) sensible au champ magnétique ayant au moins trois axes de sensibilité, comprenant une étape d'élaboration (B6) d'un vecteur à neuf variables ($\Lambda$) constitué dudit vecteur de mouvement à six variables et dudit vecteur de perturbations à trois variables, et une étape de pondération (B6) dudit vecteur à neuf variables ($\theta$) adaptée à transformer ledit vecteur à neuf variables en un vecteur à au plus cinq variables inconnues à estimer, **caractérisé en ce qu'**il comprend une étape de choix (B7) d'une configuration de mouvement parmi une table de configurations de mouvement, et **en ce que** l'étape de pondération (B6) est adaptée à remplacer une variable inconnue par une valeur connue dans ledit vecteur à neuf variables ($\Lambda$) en fonction de ladite configuration choisie.

2. Procédé d'estimation conforme à la revendication 1, **caractérisé en ce que** ledit solide est mobile dans un milieu susceptible de générer des perturbations magnétiques, ladite configuration de mouvement étant choisie parmi un ensemble de configurations de mouvement comprenant notamment un mouvement dans un milieu sans perturbation magnétique, un mouvement dans un espace à une dimension, un mouvement dans un plan et un mouvement ayant au moins deux degrés de liberté connus.

3. Procédé d'estimation conforme à la revendication 1 ou la revendication 2, **caractérisé en ce que** l'étape de pondération (B6) comprend une étape de choix d'un vecteur de poids ($\alpha$) adapté à modifier le poids respectif desdits capteurs équipant le solide et **en ce que** ledit procédé comprend une étape d'estimation (B4, B5) d'au moins une variable dudit vecteur ($\Lambda$) à au plus cinq variables inconnues à estimer à partir de la mesure d'au moins un capteur.

4. Procédé d'estimation conforme à la revendication 3, **caractérisé en ce qu'**il comprend au moins une étape de réitération desdites étapes de choix (B6) d'un vecteur de poids ($\alpha$) et d'estimation (B4, B5) d'au moins une variable du vecteur ($\Lambda$) à au plus cinq variables inconnues à estimer, le vecteur de poids ($\alpha$) choisi à ladite étape de choix étant différent à chaque étape de réitération.

5. Procédé d'estimation conforme à l'une des revendications 3 ou 4, **caractérisé en ce qu'**il comprend une étape de choix (B6) d'un vecteur de poids ($\alpha$) adapté à ignorer la mesure du ou des capteurs sensibles à l'accélération (Ca), une étape d'estimation (B4, B5) d'au moins deux variables ($\theta_2$, $\theta_3$) dudit vecteur ($\Lambda$) à au plus cinq variables inconnues à estimer à partir de la mesure du ou des capteurs sensibles au champ magnétique (Cm), une étape de choix (B6) d'un vecteur de poids ($\alpha$) adapté à ignorer la mesure du ou des capteurs sensibles au champ magnétique (Cm) et une étape d'estimation (B4, B5) d'au plus les trois autres variables ($\theta_1$, $a_1$, $a_2$) dudit vecteur ($\Lambda$) à au plus cinq variables inconnues à estimer à partir de la mesure du ou des capteurs sensibles à l'accélération (Ca).

6. Procédé d'estimation conforme à l'une des revendications 3 ou 4, **caractérisé en ce qu'**il comprend une étape de choix (B6) d'un vecteur de poids ($\alpha$) adapté à ignorer la mesure du ou des capteurs sensibles au champ magnétique (Cm), une étape d'estimation (B4, B5) d'au moins deux variables dudit vecteur ($\Lambda$) à au plus cinq variables inconnues à estimer à partir de la mesure du ou des capteurs sensibles à l'accélération (Ca), une étape de choix (B6) d'un vecteur de poids ($\alpha$) adapté à ignorer les capteurs sensibles à l'accélération (Ca) et une étape d'estimation (B4, B5) d'au plus les trois autres variables dudit vecteur ($\Lambda$) à au plus cinq variables inconnues à estimer à partir de la mesure du ou des capteurs sensibles au champ magnétique (Cm).

7. Procédé d'estimation conforme à l'une des revendications 1 à 6, **caractérisé en ce que** ledit vecteur ($\Lambda$) à neuf variables comprend un vecteur de rotation $\theta$ à trois degrés de liberté, ledit vecteur de rotation étant représenté par quatre composantes ($q_0$, $q_1$, $q_2$, $q_3$) d'un quaternion (q) associées à une contrainte sur lesdites quatre composantes ($q_0$, $q_1$, $q_2$, $q_3$).

8. Procédé d'estimation conforme à la revendication 7, **caractérisé en ce que**, à l'étape d'estimation (B4, B5) d'au moins une variable dudit vecteur ($\Lambda$) à au plus cinq variables inconnues à estimer, ladite contrainte des composantes du quaternion ($\alpha$) est intégrée dans la représentation du vecteur de rotation $\theta$.

9. Procédé d'estimation conforme à l'une des revendications 1 à 8, **caractérisé en ce qu'**à l'étape d'estimation (B5) d'au moins une variable dudit vecteur ($\Lambda$) à au plus cinq variables inconnues à estimer, une fonction de minimisation d'erreurs de type quasi Newton est utilisée.

**10.** Procédé d'estimation conforme à l'une des revendications 1 à 9, **caractérisé en ce qu'**à l'étape de pondération, ladite pondération du vecteur ($\Lambda$) à neuf variables est mise en oeuvre selon des conditions de mouvement du solide mobile et dudit milieu susceptible de générer des perturbations.

**11.** Dispositif d'estimation du mouvement d'un solide mobile dans un milieu adapté à générer des perturbations définies par un vecteur (*b*) à trois variables, ledit mouvement étant défini par un vecteur ($\theta$, *a*) à six variables, ledit dispositif étant monté sur ledit solide et comprenant au moins un capteur sensible à l'accélération (Ca) ayant au moins trois axes de sensibilité (V1, V2, V3) et au moins un capteur sensible au champ magnétique (Cm) ayant au moins trois axes de sensibilité (V4, V5, V6), **caractérisé en ce qu'**il est adapté à mettre en oeuvre toutes les étapes d'un procédé d'estimation du mouvement d'un solide conforme à l'une des revendications 1 à 10.

**Patentansprüche**

**1.** Verfahren zur Schätzung der Bewegung eines beweglichen Festkörpers in einer Umgebung, die in der Lage ist, Störungen, welche durch einen Vektor mit drei Variablen (*b*) definiert sind, hervorzurufen, wobei die Bewegung durch einen Vektor mit sechs Variablen ($\theta$, a) definiert ist und wobei der Festkörper mit wenigstens einem beschleunigungsempfindlichen Sensor (Ca), der wenigstens drei Empfindlichkeitsachsen hat, und mit wenigstens einem magnetfeldempfindlichen Sensor (Cm), der wenigstens drei Empfindlichkeitsachsen hat, ausgestattet ist, umfassend einen Schritt zum Erstellen (B6) eines Vektors mit neun Variablen ($\Lambda$), der von dem Bewegungsvektor mit sechs Variablen und von dem Störungsvektor mit drei Variablen gebildet ist, sowie einen Schritt zur Gewichtung (B6) des Vektors mit neun Variablen ($\Lambda$), der dazu ausgelegt ist, den Vektor mit neun Variablen in einen Vektor mit höchstens fünf zu schätzenden unbekannten Variablen umzuwandeln,
**dadurch gekennzeichnet, dass**
es einen Schritt zur Auswahl (B7) einer Bewegungskonfiguration aus einer Tabelle von Bewegungskonfigurationen umfasst und dass der Gewichtungsschritt (B6) dazu ausgelegt ist, eine unbekannte Variable durch einen bekannten Wert in dem Vektor mit neun Variablen ($\Lambda$) in Abhängigkeit von der gewählten Konfiguration zu ersetzen.

**2.** Schätzungsverfahren nach Anspruch 1,
**dadurch gekennzeichnet, dass**
der Festkörper in einer Umgebung beweglich ist, die in der Lage ist, magnetische Störungen hervorzurufen, wobei die Bewegungskonfiguration aus einer Einheit von Bewegungskonfigurationen ausgewählt ist, die insbesondere eine Bewegung in einer Umgebung ohne magnetische Störung, eine Bewegung in einem eindimensionalen Raum, eine Bewegung in einer Ebene und eine Bewegung mit wenigstens zwei bekannten Freiheitsgraden umfasst.

**3.** Schätzungsverfahren nach Anspruch 1 oder Anspruch 2,
**dadurch gekennzeichnet, dass**
der Gewichtungsschritt (B6) einen Schritt zur Auswahl eines Gewichtsvektors ($\alpha$) umfasst, der dazu ausgelegt ist, das jeweilige Gewicht der Sensoren, mit denen der Festkörper ausgestattet ist, zu verändern, und dass das Verfahren einen Schritt zur Schätzung (B4, B5) wenigstens einer Variablen des Vektors ($\Lambda$) mit höchstens fünf zu schätzenden unbekannten Variablen anhand der Messung wenigstens eines Sensors umfasst.

**4.** Schätzungsverfahren nach Anspruch 3,
**dadurch gekennzeichnet, dass**
es wenigstens einen Schritt zur Wiederholung der Schritte zur Auswahl (B6) eines Gewichtsvektors ($\alpha$) und zur Schätzung (B4, B5) wenigstens einer Variablen des Vektors ($\Lambda$) mit höchstens fünf zu schätzenden unbekannten Variablen umfasst, wobei der bei dem Auswahlschritt gewählte Gewichtsvektor ($\alpha$) bei jedem Wiederholungsschritt unterschiedlich ist.

**5.** Schätzungsverfahren nach einem der Ansprüche 3 oder 4,
**dadurch gekennzeichnet, dass**
es einen Schritt zur Auswahl (B6) eines Gewichtsvektors ($\alpha$), der dazu ausgelegt ist, die Messung des oder der beschleunigungsempfindlichen Sensoren (Ca) zu ignorieren, einen Schritt zur Schätzung (B4, B5) von wenigstens zwei Variablen ($\theta_2$, $\theta_3$) des Vektors ($\Lambda$) mit höchstens fünf zu schätzenden unbekannten Variablen anhand der Messung des oder der magnetfeldempfindlichen Sensoren (Cm), einen Schritt zur Auswahl (B6) eines Gewichtsvektors ($\alpha$), der dazu ausgelegt ist, die Messung des oder der magnetfeldempfindlichen Sensoren (Cm) zu ignorieren, sowie einen Schritt zur Schätzung (B4, B5) von höchstens den drei weiteren Variablen ($\theta_1$, $a_1$, $a_2$) des Vektors ($\Lambda$) mit höchstens fünf zu schätzenden unbekannten Variablen anhand der Messung des oder der beschleunigungsempfindlichen Sensoren (Ca) umfasst.

6. Schätzungsverfahren nach einem der Ansprüche 3 oder 4,
   **dadurch gekennzeichnet, dass**
   es einen Schritt zur Auswahl (B6) eines Gewichtsvektors ($\alpha$), der dazu ausgelegt ist, die Messung des oder der magnetfeldempfindlichen Sensoren (Cm) zu ignorieren, einen Schritt zur Schätzung (B4, B5) von wenigstens zwei Variablen des Vektors ($\Lambda$) mit höchstens fünf zu schätzenden unbekannten Variablen anhand der Messung des oder der beschleunigungsempfindlichen Sensoren (Ca), einen Schritt zur Auswahl (B6) eines Gewichtsvektors ($\alpha$), der dazu ausgelegt ist, die beschleunigungsempfindlichen Sensoren (Ca) zu ignorieren, sowie einen Schritt zur Schätzung (B4, B5) von höchstens den drei weiteren Variablen des Vektors ($\Lambda$) mit höchstens fünf zu schätzenden unbekannten Variablen anhand der Messung des oder der magnetfeldempfindlichen Sensoren (Cm) umfasst.

7. Schätzungsverfahren nach einem der Ansprüche 1 bis 6,
   **dadurch gekennzeichnet, dass**
   der Vektor ($\Lambda$) mit neun Variablen einen Rotationsvektor $\theta$ mit drei Freiheitsgraden umfasst, wobei der Rotationsvektor durch vier Komponenten ($q_0$, $q_1$, $q_2$, $q_3$) einer Quaternion (q) dargestellt ist, die einer Zwangsbedingung für die vier Komponenten ($q_0$, $q_1$, $q_2$, $q_3$) zugeordnet ist.

8. Schätzungsverfahren nach Anspruch 7,
   **dadurch gekennzeichnet, dass**
   bei dem Schritt zur Schätzung (B4, B5) von wenigstens einer Variablen des Vektors ($\Lambda$) mit höchstens fünf zu schätzenden unbekannten Variablen die Bedingung der Komponenten der Quaternion ($\alpha$) in die Darstellung des Rotationsvektors $\theta$ integriert wird.

9. Schätzungsverfahren nach einem der Ansprüche 1 bis 8,
   **dadurch gekennzeichnet, dass**
   bei dem Schritt zur Schätzung (B5) von wenigstens einer Variablen des Vektors ($\Lambda$) mit höchstens fünf zu schätzenden unbekannten Variablen eine Funktion zur Fehlerminimierung vom Typ Quasi-Newton verwendet wird.

10. Schätzungsverfahren nach einem der Ansprüche 1 bis 9,
    **dadurch gekennzeichnet, dass**
    bei dem Gewichtungsschritt die Gewichtung des Vektors ($\Lambda$) mit neun Variablen entsprechend Bedingungen der Bewegung des beweglichen Festkörpers und der Umgebung, die in der Lage ist, Störungen hervorzurufen, durchgeführt wird.

11. Vorrichtung zur Schätzung der Bewegung eines beweglichen Festkörpers in einer Umgebung, die geeignet ist, Störungen, welche durch einen Vektor (b) mit drei Variablen definiert sind, hervorzurufen, wobei die Bewegung durch einen Vektor ($\theta$, a) mit sechs Variablen definiert ist, wobei die Vorrichtung an dem Festkörper angebracht ist und wenigstens einen beschleunigungsempfindlichen Sensor (Ca), der wenigstens drei Empfindlichkeitsachsen (V1, V2, V3) hat, und wenigstens einen magnetfeldempfindlichen Sensor (Cm), der wenigstens drei Empfindlichkeitsachsen (V4, V5, V6) hat, umfasst,
    **dadurch gekennzeichnet, dass**
    sie dazu ausgelegt ist, alle Schritte eines Verfahrens zur Schätzung der Bewegung eines Festkörpers nach einem der Ansprüche 1 bis 10 durchzuführen.

**Claims**

1. Method of estimating movement of a solid mobile in a medium liable to generate disturbances defined by a vector with three variables (b), said movement being defined by a vector with six variables ($\theta$, a) and said solid being equipped with at least one acceleration sensor (Ca) having at least three sensitive axes and at least one magnetic field sensor (Cm) having at least three sensitive axes, comprising a step (B6) of producing a vector ($\Lambda$) with nine variables consisting of said movement vector with six variables and said disturbance vector with three variables, and a step (B6) of weighting said vector ($\Lambda$) with nine variables adapted to transform said vector with nine variables into a vector with at most five unknown variables to be estimated, **characterized in that** it comprises a step (B7) of choosing a movement configuration from a table of movement configurations, and **in that** the weighting step (B6) is adapted to replace an unknown variable with a known value in said vector ($\Lambda$) with nine variables as a function of said configuration chosen.

**2.** Estimation method according to claim 1, **characterized in that** said solid is mobile in a medium liable to generate magnetic disturbances, said movement configuration being chosen from a set of movement configurations including movement in a medium with no magnetic disturbance, movement in a space with one dimension, movement in a plane and movement having at least two known degrees of freedom.

**3.** Estimation method according to claim 1 or claim 2, **characterized in that** the weighting step (B6) includes a step of choosing a weighting vector ($\alpha$) adapted to modify the respective weight of said sensors equipping the solid and said method includes a step (B4, B5) of estimating at least one variable of said vector ($\Lambda$) with at most five unknown variables to be estimated from the measurement from at least one sensor.

**4.** Estimation method according to claim 3, **characterized in that** it comprises at least one step of reiteration of said step (B6) of choosing a weighting vector ($\alpha$) and said steps (B4, B5) of estimating at least one variable of the vector ($\Lambda$) with at most five unknown variables to be estimated, the weighting vector ($\alpha$) chosen in said choice step being different in each reiteration step.

**5.** Estimation method according to either of claims 3 or 4, **characterized in that** it includes a step (B6) of choosing a weighting vector ($\alpha$) adapted to ignore the measurement from the acceleration sensor(s) (Ca), a step (B4, B5) of estimating at least two variables ($\theta_2$, $\theta_3$) of said vector ($\Lambda$) with at most five unknown variables to be estimated from the measurement from the magnetic field sensor(s) (Cm), a step (B6) of choosing a weighting vector ($\alpha$) adapted to ignore the measurement from the magnetic field sensor(s) (Cm) and a step (B4, B5) of estimating at most the other three variables ($\theta_1$, $a_1$, $a_2$) of said vector ($\Lambda$) with at most five unknown vectors to be estimated from the measurement from the acceleration sensor (s) (Ca).

**6.** Estimation method according to either of claims 3 or 4, **characterized in that** it includes a step (B6) of choosing a weighting vector ($\alpha$) adapted to ignore the measurement from the magnetic field sensor(s) (Cm), a step (B4, B5) of estimating at least two variables of said vector ($\Lambda$) with at most five unknown variables to be estimated from the measurement from the acceleration sensor(s) (Ca), a step (B6) of choosing a weighting vector ($\alpha$) adapted to ignore the acceleration sensors (Ca) and a step (B4 B5) of estimating at most the other three variables of said vector ($\Lambda$) with at most five unknown variables to be estimated from the measurement from the magnetic field sensor(s) (Cm).

**7.** Estimation method according to any one of claims 1 to 6, **characterized in that** said vector ($\Lambda$) with nine variables includes a rotation vector $\theta$ with three degrees of freedom represented by four components ($q_0$, $q_1$, $q_2$, $q_3$) of a quaternion (q) associated with a constraint on said four components ($q_0$, $q_1$, $q_2$, $q_3$).

**8.** Estimation method according to claim 7, **characterized in that**, in the step (B4, B5) of estimating at least one variable of said vector ($\Lambda$) with at most five unknown variables to be estimated, said constraint on the components of the quaternion ($\alpha$) is integrated into the representation of the rotation vector $\theta$.

**9.** Estimation method according to any one of claims 1 to 8, **characterized in that** a quasi-Newton type error minimizing function is used in the step (B5) of estimating at least one variable of said vector ($\Lambda$) with at most five unknown variables to be estimated.

**10.** Estimation method according to any one of claims 1 to 9, **characterized in that** the vector ($\Lambda$) with nine variables is weighted during the weighting step in accordance with movement conditions of the mobile solid and of said medium liable to generate disturbances.

**11.** Device for estimating the movement of a solid mobile in a medium liable to generate disturbances defined by a vector (b) with three variables, said movement being defined by a vector ($\theta$, a) with six variables, said device being mounted on said solid and including at least one acceleration sensor (Ca) having at least three sensitive axes (V1, V2, V3) and at least one magnetic field sensor (Cm) having at least three sensitive axes (V4, V5, V6), **characterized in that** it is adapted to implement all the steps of a method according to any one of claims 1 to 10 of estimating the movement of a solid.

Fig.1

Fig.2A

Fig.2B

Fig.2C

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0204260

- US 2002100178 A

**Littérature non-brevet citée dans la description**

- **MARINS J L et al.** *An extended Kalman filter for quaternion-based orientation estimation using MARG sensors,* ISBN 0-7803-6612-3